# EUROPÄISCHE PATENTSCHRIFT

(11) **EP 0 746 703 B1**
(45) Veröffentlichungstag und Bekanntmachung des Hinweises auf die Patenterteilung: **14.10.1998**
(21) Anmeldenummer: 95909779.1
(22) Anmeldetag: 24.02.1995
(51) Int. Cl.: F16F 15/18, F16F 15/30, F02N 11/04, F02B 75/06, H02K 41/025

(54) **VERFAHREN ZUR AKTIVEN SCHWINGUNGSDÄMPFUNG UND EIN SYSTEM ZU DESSEN DURCHFÜHRUNG**
PROCESS AND DEVICE FOR ACTIVE VIBRATION DAMPING
PROCEDE ET SYSTEME D'AMORTISSEMENT ACTIF DE VIBRATIONS

(30) Priorität: 28.02.1994 DE 4406482; 05.07.1994 DE 4423577
(43) Veröffentlichungstag der Anmeldung: 11.12.1996
(73) Patentinhaber: ISAD Electronic Systems GmbH & Co.KG, 50733 Köln (DE)
(72) Erfinder: MASBERG, Ullrich, D-51503 Rösrath (DE); ZEYEN, Klaus-Peter, D-50670 Köln (DE)
(74) Vertreter: Turi, Michael, Dipl.-Phys.
(86) Internationale Anmeldenummer: EP9500680
(87) Internationale Veröffentlichungsnummer: WO9523301

(56) Entgegenhaltungen:
- EP-A- 0 544 576
- WO-A-92/07411
- US-A- 5 140 868
- PATENT ABSTRACTS OF JAPAN vol. 004 no. 029 (M-002) ,14.März 1980 & JP,A,55 005454 (TOYOTA MOTOR CORP) 16.Januar 1980,
- PATENT ABSTRACTS OF JAPAN vol. 011 no. 028 (M-557) ,27.Januar 1987 & JP,A,61 200333 (NISSAN MOTOR CO LTD) 4.September 1986,
- PATENT ABSTRACTS OF JAPAN vol. 006 no. 115 (E-115) ,26.Juni 1982 & JP,A,57 043577 (TOSHIBA CORP) 11.März 1982,
- PATENT ABSTRACTS OF JAPAN vol. 004 no. 025 (M-001) ,5.März 1980 & JP,A,55 001431 (TOYOTA MOTOR CORP) 8.Januar 1980,
- PATENT ABSTRACTS OF JAPAN vol. 010 no. 331 (M-533) ,11.November 1986 & JP,A,61 135937 (NISSAN MOTOR CO LTD) 23.Juni 1986,
- PATENT ABSTRACTS OF JAPAN vol. 012 no. 013 (E-573) ,14.Januar 1988 & JP,A,62 171460 (NORIO TSUKIHARA;OTHERS: 01) 28.Juli 1987,
- PATENT ABSTRACTS OF JAPAN vol. 007 no. 240 (M-251) ,25.Oktober 1983 & JP,A,58 126434 (NISSAN JIDOSHA KK) 27.Juli 1983,
- PATENT ABSTRACTS OF JAPAN vol. 017 no. 139 (M-1385) ,22.März 1993 & JP,A,04 316760 (HINO MOTORS LTD) 9.November 1992,
- PATENT ABSTRACTS OF JAPAN vol. 012 no. 134 (M-689) ,23.April 1988 & JP,A,62 255534 (ISUZU MOTORS LTD) 7.November 1987,

## Beschreibung

Die Erfindung befaßt sich mit einem Verfahren zur aktiven Schwingungsdämpfung in Antriebsaggregaten mit wenigstens einer rotierenden Welle, insbesondere Kurbelwelle für Kraftfahrzeuge, bei welchem Drehzahlungleichförmigkeiten der rotierenden Welle dadurch unterhalb vorgegebener Werte gehalten werden, daß ein auf der Welle (12) sitzendes Schwungrad als bewegtes Grundelement einer elektrischen Maschine und verwendet wird und einem System zu dessen Durchführung.

Systeme dieser Art werden überwiegend zur Minderung eines Geräuschpegels eingesetzt, der sich in einem Fahrzeug während des Fahrbetriebes ausbildet und von den Fahrzeuginsassen meist als störend empfunden wird. Als wesentliche Schall- bzw. Geräuschquellen kommen beispielsweise in einem Kraftfahrzeug vor allem der Verbrennungsmotor samt den angeschlossenen Antriebskomponenten, wie Kurbelwelle, Gelenkwelle, etc., die Auspuffanlage, Reifengeräusche, usw. in Betracht.

Systeme zur Geräuschminderung in einem Fahrzeug durch aktive Schwingungsdämpfung sind, etwa aus der DE 39 39 828 C2 oder EP 0 372 590 B1 bekannt. Diesen Beispielen liegt ein gemeinsames Prinzip zugrunde: Die aus der Überlagerung aller Schallquellen resultierende Störschwingung wird hinsichtlich ihrer Phase und Amplitude erfaßt, z.B. an der Fahrzeugkarosserie; ihr wird eine amplitudengleiche zusätzliche Gegenschwingung überlagert. Hierzu ist eine entsprechend angesteuerte zusätzliche Schwingungsquelle vorgesehen, welche die Gegenschwingungen z.B. auf die Fahrzeugkarosserie überträgt. Die in den Druckschriften DE 41 41 637 A1 und G 91 04 812 U1 beschriebenen Systeme zur aktiven Schwingungsdämpfung arbeiten im wesentlichen ebenfalls nach diesem Prinzip.

Bei den in der DE 36 23 627 A1 und der DE 32 30 607 A1 beschriebenen Verfahren wird das Drehzahlverhalten im Antriebsstrang eines Verbrennungsmotors auf das Auftreten von Drehungleichförmigkeiten hin überwacht. Eine Steuereinrichtung leitet daraus Stellgrößen zur Steuerung eines Stellgliedes ab in Form einer Rutschkupplung bzw. eines Drehstrom-Elektromotors, dessen Läufer mit der Kurbelwelle des Verbrennungsmotors gekoppelt ist. Weiterhin zeigt die DE-OS 30 05 561 Schwingungsdämpfungssystem mit einem Stellglied in Form einer Wirbelstrombremse. Bei dem aus der Druckschrift DE 41 00 937 A1 bekannten Schwingungsdämpfungssystem werden etwaige Drehungleichförmigkeiten einer Kurbelwelle gemessen und über ein Stellglied in Form eines Wechselstrom-Synchronmotorsgedämpft.

Patent Abstracts of Japan, Band 4, Nr. 29 (M-002), 14. März 1980 (JP-A-55 005 454), offenbart eine Vorrichtung zur aktiven Schwingungsdämpfung eines Verbrennungsmotors, dessen Kurbelwelle mit einem Schwungrad ausgerüstet ist. Ein Magnetjoch umgreift das Schwungrad in einem kleinen Bereich dessen Umfangs. Das Magnetjoch und das Schwungrad bilden zusammen ein Stellglied in Form einer Wirbelstrombremse.

Diese bekannten Schwingungsdämpfungssysteme haben den Nachteil, daß sie zusätzliche relativ aufwendige Schwingungsquellen zur Erzeugung von Gegenschwingungen benötigen. Ferner hängt der Erfolg der Geräuschbekämpfung stark vom Ort, der Form und dem Material der mit den Gegenschwingungen beaufschlagten Fahrzeugflächen ab, was zu einer Komplizierung derartiger Systeme führt. Außerdem sind die zuvor erwähnten Stellglieder zur Beeinflussung der Wellenbewegung einer rotierenden Welle aufgrund ihrer Baugröße nur mit großem Platzaufwand in einem Fahrzeug unterzubringen.

Der nachfolgend genannte Stand der Technik befaßt sich nur mit Teilaspekten der vorliegenden aktiven Schwingungsdämpfung: Die EP 70 553 B1 beschreibt eine elektrische Maschine zur Beeinflussung der Drehzahl einer Gasturbine. Schließlich beschreibt die DE 453 179 Al eine Vorrichtung zur Überwachung der Drehzahl einer Turbinenenabtriebswelle eines Stromerzeugergenerators.

Die Erfindung zielt darauf ab, ein anderes Verfahren zur aktiven Schwingungsdämpfung sowie ein System zu dessen Durchführung zur Verfügung zu stellen, welche weniger aufwendig sind und sich insbesondere für Kraftfahrzeuge eignen.

Die Erfindung erreicht dieses Ziel mit den Gegenständen der Ansprüche 1 und 6. Bevorzugte Varianten sind in den Unteransprüchen beschrieben.

Danach schlägt die Erfindung ein aktives Schwingungsdämpfungssystem der eingangs genannten Art vor, wobei das Stellglied eine elektrischen Linearmaschine bzw. ein Linearmotor ist. Beim erfindungsgemäßen Verfahren zur aktiven Schwingungsdämpfung in Antriebsaggregaten mit wenigstens einer rotierenden Welle werden Drehzahlungleichförmigkeiten dadurch unterhalb vorgegebener Werte gehalten werden, daß ein auf der Welle sitzendes Schwungrad als bewegtes Grundelement einer Linearmaschine verwendet wird.

Eine der Hauptgeräuschquellen sind die - von dem Antriebsaggregat betriebenen oder darin befindlichen - Wellen, bei einem Kraftfahrzeug z.B. die Kurbelwelle, die Kardanwelle, die Gelenkwelle, etc.. Antriebsaggregate, insbesondere Verbrennungsmotoren, weisen im Fahrbetrieb in nahezu allen, zumindest aber vielen Drehzahlbereichen Abweichungen von einer vorgegebenen Solldrehzahl auf. Bei Verbrennungsmotoren werden derartige Drehungleichförmigkeiten bzw. Drehzahlstörungen z.B. durch eine ungleichmäßige Verbrennung im Einzylinderbetrieb oder durch Ausfall eines Zylinders im Mehrzylinderbetrieb verursacht. Sie führen meist zu unerwünschten Störschwingungen der Abtriebswelle, insbesondere der Kurbelwelle, die sich auf andere Teile des Fahrzeuges übertragen und zu einem störenden Geräuschpegel führen können.

Die Erfindung verhindert diese Geräuschbildung bereits in ihrem Ansatz. Sie wählt nämlich unmittelbar die potentielle Störquelle, d.h. die Drehzahl, genauer den Momentanwert der Drehzahl bzw. die Winkelsegmentgeschwindigkeit, der Welle als Regelgröße eines Regelkreises. Es wird also die Momentandrehzahl der Welle, bei Kraftfahrzeugen insbesondere die Momentandrehzahl der Kurbelwelle, auf den gewünschten Wert geregelt, d.h. bei etwaigen Abweichungen automatisch wieder hergestellt und aufrechterhalten. Abweichungen von einem vorgegebenen Sollwert werden also sofort korrigiert. Der Sollwert entspricht dabei den optimalen Geräuschbedingungen in einem Kraftfahrzeug, d.h. einem gräuschlosen, zumindest aber geräuscharmen Fahrbetrieb.

Statt zusätzliche Schwingungsquellen einzusetzen, setzt die Erfindung unmittelbar an den maßgeblichen Ursachen, d.h. den beteiligten Schwingungs- bzw. Schallquellen, an und unterdrückt - die von den Drehungleichförmigkeiten der rotirenden Wellen verursachten - Störschwingungen bereits in ihrem Ansatz. Somit kommt es gar nicht zur Ausbildung der Störschwingungen und der damit einhergehenden Geräusche im Fahrzeug. Die Erfindung geht somit einen anderen Weg wie der zuvor beschriebene Stand der Technik.

Neben einer ebenso einfachen wie effektiven Geräuschminderung ergeben sich durch die Erfindung weitere wichtige Vorteile: Langfristig wird auch eine Materialermüdung und somit ein Ausfall der Welle infolge einer Schwingungsbeanspruchung vermieden. Ferner kann das erfindungsgemäße Schwingungsdämpfungssystem die in der Fahrzeugtechnik bisher verwendeten Drehschwingungstilger ersetzen. Derartige Drehschwingungstilger sind beispielsweise aus der EP 0 250 913 A2 (CLOUTH) oder aus dem DE 89 07 426.2 U1 (CLOUTH) bekannt. Sie sind meist als konzentrisch zur Welle, etwa der Kurbelwelle, in Gummi gelagerte, "passiv" schwingende Zusatzmassen ausgebildet. Sie haben vor allem den Nachteil, daß sie im allgemeinen nur auf eine bestimmte Schwingungsfrequenz abstimmbar sind und außer zusätzlichen Kosten eine problematische Erhöhung des Fahrzeuggewichtes bedeuten können.

Als besonderer Vorteil verwendet die Erfindung als Stellglied zur Beeinflussung der Drehung der Welle eine Linearmaschine. Solche Linearmaschinen nutzen das Prinzip der elektromagnetischen Induktion bzw. die Lorentz-Kraft aus. Ihnen liegt in der Regel folgendes Konstruktionsprinzip zugrunde: ein stationäres Grundelement (nachfolgend Ständer genannt) und ein bewegtes Grundelement (nachfolgend Läufer genannt) sind räumlich-körperlich durch einen Spalt, insbesondere Luftspalt, voneinander getrennt, jedoch über einen durch den Spalt tretenden gemeinsamen magnetischen Fluß miteinander verknüpft. Dabei erzeugt wenigstens ein Grundelement das magnetische Primärfeld, meistens mit Hilfe einer oder mehrerer Erregerwicklungen, und zwar als Wanderfeld. Das andere Grundelement ist mit einem oder mehreren elektrischen Leitern bestückt oder besteht aus solchen. Das Primärfeld des einen Grundelements durchsetzt über den Spalt das andere Grundelement und bewirkt durch Verknüpfung mit dem dort induzierten elektromagnetischen Feld eine antreibende Kraft, die Lorentz-Kraft. Für die Wirkungsweise der Linearmaschine ist es grundsätzlich gleichgültig, ob die Erregerwicklungen auf dem stationären oder bewegten Grundelement, also dem Ständer oder dem Läufer, angeordnet sind. Somit kann jede Linearmaschine sowohl als Motor, als auch als Generator betrieben werden. Ob sie als Motor oder als Generator arbeitet, ist stets nur eine Frage der Betriebsart.

Beim vorliegenden Stellglied ist das auf einer Welle des Antriebsaggregates sitzende Schwungrad der Läufer einer nach dem obigen Konstruktionsprinzip aufgebauten Linearmaschine. Die Übertragung einer Kraft, genauer eines Drehmoments, auf die rotierende Welle zur Kompensation von Drehungleichförmigkeiten findet somit über eine elektromagnetische Kopplung zwischen dem (als Schwungrad ausgebildeten) bewegten Läufer und dem stationären Ständer der Linearmaschine statt. Die Stärke der magnetischen Kopplung und damit die Stärke des auf die Welle ausgeübten Schub- oder Verzögerungsmomentes kann einfach durch eine Änderung des magnetischen Flusses durch den Spalt, d.h. insbesondere über die Stromversorgung der Erregerspulen der elektrischen Maschine, und/oder durch eine Änderung des Spaltes, einschließlich eines darin befindlichen Mediums gesteuert werden.

Daher sind im vorliegenden Fall beide og. Betriebsarten, d.h. der Motorbetrieb und der Generatorbetrieb, möglich, sinnvoll und vorteilhaft: Hierzu weist das erfindungsgemäße Schwingungsdämpfungssystem Schaltmittel auf, welche das Stellglied, d.h. die Linearmaschine, je nach Art der zu kompensierenden Drehungleichförmigkeiten vom Motorbetrieb in den Generatorbetrieb umschalten; es jeweils als (beschleunigender) Elektromotor bei Drehzahlabfällen und jeweils als (bremsender) Generator bei Drehzahlanstiegen betrieben wird. Die im Generatorbetrieb zurückgewonnene Energie kann gespeichert werden, etwa nach Art der Energierückgewinnung mittels einer Lichtmaschine.

Falls die rotierende Welle die Abtriebswelle eines Antriebsaggregates, insbesondere die Kurbelwelle eines Kraftfahrzeug-Verbrennungsmotors ist, sind vorzugsweise Steuermittel vorgesehen, welche das Stellglied, d.h. die Linearmaschine, beim Starten des Antriebsaggregates als Anlasser betreiben.

Viele Antriebsaggregate, z.B. Verbrennungsmotoren in Kraftfahrzeugen, können nicht aus eigener Kraft anlaufen. Sie müssen zunächst durch eine äußere Kraftquelle, den Anlasser, angeworfen und auf die zum Anspringen benötigte Motordrehzahl gebracht werden. Erst danach können sie aus eigener Kraft weiterlaufen. Dies erfordert je nach Motortyp, Hubvolumen, Lagerreibung, etc. ein unterschiedlich großes Anlaufdrehmoment, welches vom Anlasser aufgebracht werden muß. Dieser arbeitet gewöhnlich über ein Getriebe auf eine massive Schwungmasse oder ein Schwungrad, welche/welches auf einer Welle des Antriebsaggregates - bei Kraftfahrzeugen die Kurbelwelle - sitzt.

Bei Kraftfahrzeugen ist es bekannt, einen batteriegespeisten Gleichstrommotor als Anlasser zu verwenden, der das notwendige Drehmoment über ein Antriebsritzel auf das Schwungrad übersetzt. Meistens wird hierfür ein sog. Gleichstrom-Reihenschlußmotor eingesetzt, d.h. ein elektrischer Gleichstromotor, dessen Erreger- bzw. Statorwicklung in Reihe mit der Ankerwicklung geschaltet ist. Zum Anlassen wird das Antriebsritzel des Reihenschlußmotors - unter Einwirkung eines magnetschaltergesteuerten Einrückhebels - mit einem auf der Peripherie der Schwungradscheibe sitzenden Zahnkranz in Eingriff gebracht. Nach dem Anlassen wird diese Verbindung wieder unterbrochen. Häufig ist zusätzlich zwischen dem Anker des Reihenschlußmotors und dem Antriebsritzel eine Freilaufkupplung angeordnet, die als Überlastschutz ausgebildet ist. Sie soll verhindern, daß der Anker beim Anspringen des Verbrennungsmotors mit unerwünscht hoher Drehzahl angetrieben wird. Bei weiteren bekannten Anlassern ist für die mechanische Verbindung zwischen dem Anker des Reihenschlußmotors und dem Zahnkranz des Schwungrades ein aufwendiges Einspurgetriebe vorgesehen, welches das "Einspuren" des Ritzels in den Zahnkranz erleichtern soll. Somit sind diese bekannten Anlasser ein ebenso aufwendiges wie reparaturanfälliges Bauteil. Auch das Schwungrad stellt ein aufwendiges Bauteil dar, da es an seinem äußeren Umfang mit dem Zahnkranz für den Eingriff des Anlasserritzels und im übrigen mit Markierungen zum Steuern der Zündvorgänge im Motor versehen ist.

Demgegenüber ergeben die vorgenannten bevorzugten Weiterentwicklungen der Erfindung gemäß den Ansprüchen 7 bis 9 - insbesondere beim Einsatz für Verbrennungsmotoren, besonders bei Kraftfahrzeugen - mehrere Vorteile gleichzeitig: das erfindungsgemäße, auch als Anlasser arbeitende Stellglied zeichnet sich durch seine kompakte und einfache Bauweise aus. Es ist nämlich gewissermaßen "um das Schwungrad herum" konstruiert. Hierdurch werden das Gewicht und die Abmessungen im Motorbereich eines Kraftfahrzeuges entscheidend verringert. Der zuvor beschriebene, vom Kraftfahrzeug her bekannte Anlasser, genauer dessen Läufer und dessen Übersetzungsgetriebe samt Antriebsritzel werden überflüssig. Außerdem entfällt der aufwendige Zahnkranz am Schwungrad, so daß das Schwungrad entsprechend einfacher und mit verringertem Herstellungsaufwand gefertigt werden kann. Weiterhin wird eine mechanische "getriebemäßige" Übertragung des Schub- bzw. Verzögerungmomentes auf das Schwungrad vermieden und durch eine über den Spalt zwischen Schwungrad und Ständer greifenden magnetischen Kopplung ersetzt. Beim erfindungsgemäßen Schub- oder Dämpfungsvorgang berühren sich somit keine Teile mehr, da das Schub- oder Dämpfungsmoment von elektromagnetischen Feldkräften aufgebracht wird. Außerdem sind, abgesehen vom Schwungrad, keine bewegten Teile mehr vorhanden. Das Stellglied bzw. der Anlasser unterliegt somit allenfalls einem geringen Verschleiß. Weiterhin wird auch die herkömmliche Lichtmaschine überflüssig. Im Ergebnis benötigt die Erfindung also für die aktive Schwingungsdämpfung, für das Starten bzw. Anlassen eines Antriebsaggregates und für dessen Stromversorgung nur ein einziges Bauteil. Dies bringt eine deutliche Kostenreduzierung mit sich.

Für die aktive Schwingungsdämpfung kommt als Stellglied eine elektrische Maschine - ob Gleichstrom-, Wechselstrom- oder Drehstrommaschine - in Frage, die ein ausreichend großes Schub- bzw. Verzögerungsmoment auf ihren Läufer, hier das Schwungrad des Antriebsaggregates, zur Regelung der Wellendrehzahl übertragen kann. Für den Anlasserbetrieb von Verbrennungsmotoren sind dabei solche Typen besonders geeignet, die ein kräftiges Drehmoment aufbringen und eine ausreichend hohe Drehzähl erreichen. Überraschend vorteilhaft ist das Stellglied eine Linearmaschine, d.h. eine rotierende elektrische Maschine mit dem Aufbau eines Linearmotors bzw. Linearantriebes.

Der Linearmotor kann prinzipiell als eine spezielle Form eines Induktionsmotors mit Kurzschlußläufer, insbesondere Asynchronmotors, aufgefaßt werden. Anstelle des etwa von solchen Asynchronmotoren her bekannten Drehfeldes bilden die Erregerwicklungen des Linearmotors ein reines Wanderfeld aus. Das vom Ständer (oder Läufer) erzeugte Wanderfeld durchsetzt den Läufer (oder Ständer) und induziert darin Ring- bzw. Wirbelströme, deren magnetische Felder mit dem Wanderfeld verkettet sind und im Ergebnis die gewünschte Schubkraft ausüben.

Beim erfindungsgemäßen Stellglied ist vorzugsweise das auf der rotierenden Welle sitzende Schwungrad der Läufer eines derartigen Linearmotors. Die Übertragung des Schub- bzw. Verzögerungsmoments auf das Schwungrad zur Beeinflussung der Wellendrehzahl findet dann über eine elektromagnetische Kopplung zwischen dem als Schwungrad ausgebildeten bewegten Läufer und dem stationären Ständer des Linearmotors statt. Ein hoher Kopplungswirkungsgrad wird dann erreicht, wenn der Spalt zwischen Schwungrad und Ständer des Linearmotors möglichst klein ist, - vorzugsweise etwa 0,1 bis 1,5 mm beträgt.

Als besondere Vorteile von Linearmotoren seien genannt: ihr einfacher und robuster Aufbau und ihre damit einhergehende Wartungsarmut, ihre einfache Regulierbarkeit und ihre großen Schubkräfte (bis zu 1000 N). Im übrigen kann der Linearmotor bei überhöhter Momentandrehzahl sowohl "generatorisch" - durch Energierückgabe in das Netz, als auch durch Umkehr der Laufrichtung des Wanderfeldes die Bewegung der rotirenden Welle verzögern.

Bei einem besonders einfachen Linearmotor sind die - das Wanderfeld erzeugenden - Erregerspulen auf dem Ständer (nachfolgend als Ständerspulen bezeichnet) nur an einer Seite des Schwungrades angeordnet, vorzugsweise nur innerhalb eines bestimmten segmentartigen Winkelbereiches des Schwungrades, der jedoch mit steigenden Anforderungen an das benötigte Anlaufdrehmoment ebenfalls wächst bis er den vollen Umfang, also 360 ° erreicht. Dabei können die Spulen gleich- oder ungleichmäßig auf der einen Seite des Schwungrades verteilt sein. Alternativ und/oder ergänzend, insbesondere für ein erhöhtes Anlaufdrehmoment, können die Spulen auch zu beiden Seiten des Schwungrades angeordnet sein. Das aus mehreren Ständerspulen bestehende Erregersystem kann also - ein- oder beidseitig - innerhalb bestimmter Winkelbereiche oder über den gesamten Umfang - gleich- oder ungleichmäßig - verteilt angeordnet sein. Hierdurch läßt sich der Linearmotor besonders einfach für unterschiedliche Leistungsbereiche auslegen.

Bevorzugt besteht das Schwungrad i.w. aus einem gut leitenden Material, beispielsweise aus Eisen. Um die Leitfähigkeit weiter zu erhöhen, ist es vorzugsweise mit einem Material hoher Leitfähigkeit, etwa Kupfer, beschichtet oder belegt, - und zwar auf denjenigen Flächen, die i.w. paralell zur Spulenebene der Ständerspulen liegen. Hierdurch bauen die in der leitfähigen Schicht induzierten Wirbelströme ein Sekundärfeld auf, das - wie das Primärfeld - senkrecht zur Spaltebene liegt und somit einen optimalen Kopplungsgrad garantiert. Alternativ dazu sind kurzgeschlossene Läuferwicklungen in oder auf dem Schwungrad angeordnet, - wiederum derart, daß sich das Primärfeld und das Sekundärfeld optimal verketten.

Hierdurch wird eine erhebliche Steigerung der resultierenden Schub- bzw. Verzögerungskraft erreicht. Die im Schwungrad induzierten Wirbelströme können sich in der hochleitenden Schicht oder den Läuferwicklungen ungestört ausbreiten, so daß das induzierte Magnetfeld entsprechend größer ist und zu einer verstärkten Wechselwirkung mit dem Erregerfeld führt. Untersuchungen an herkömmlichen Linearmotoren haben gezeigt, daß die resultierenden Schub- bzw. Verzögerungskräfte annähernd proportional der elektrischen Leitfähigkeit des Materials der stromführenden Läuferschichten sind. Ferner werden hierdurch auch Wärmeverluste - sog. Wirbelstromverluste - im Schwungrad auf ein Minimum reduziert.

Fertigungstechnisch besonders günstig ist es, das Schwungrad als kreisförmige Stahlscheibe auszubilden und außen auf den dem Spalt zugekehrten Flächen mit einem Kupferblech zu belegen.

Zur weiteren Steigerung der Schub- bzw. Verzögerungskraft des Stellgliedes sind bei einer weiteren bevorzugten Ausgestaltung mit Strom beaufschlagte Läuferspulen in oder auf dem Schwungrad angeordnet, derart, daß deren Magnetfeld senkrecht zur Spaltebene steht.

Besonders bei großen Abweichungen von gewünschten Solldrehzahlen ist es zweckmäßig, das Schwungrad derart auszubilden, daß es im Radialschnitt einen T-förmigem Querschnitt aufweist.

In diesem Fall können z.B. stationäre Erregerspulen, welche das Primärfeld erzeugen, sowohl seitlich als auch radial außerhalb des Schwungrades angeordnet sein, derart, daß die Erregerspulen den T-förmigen Endbereich des Schwungrades "umgreifen" - ähnlich wie bei einer Hochgeschwindigkeit-Magnetschwebebahn. Auf diese Weise wird eine starke magnetische Kopplung zwischen Erregerspulen und Schwungrad bei gleichzeitig kompakter und robuster Bauweise erzielt.

Alternativ können die Erregerspulen auch in oder auf dem Schwungrad angeordnet und ein Material hoher Leitfähigkeit oder kurzgeschlossene Wicklungen auf dem Ständer des Linearmotors angeordnet sein. Auf diese Weise werden die Funktionen von bewegtem und stationärem Grundelement hinsichtlich der Erzeugung von Primär- bzw. Erregerfeld und Sekundär- bzw. induziertem Feld gegenüber der zuvor beschriebenen Anordnung einfach vertauscht: Nunmehr erzeugen die Erregerspulen auf dem Schwungrad das Wanderfeld, welches im Ständer Wirbelströme induziert, um in Wechselwirkung mit dem Wanderfeld eine Schub- bzw. Verzögerungskrat auf das Schwungrad auszuüben.

Diese Anordnung hat den Vorteil, daß sie flexibel auf die Abmessungen im Motorbereich eines Kraftfahrzeuges angepaßt werden kann. In Folge der Wanderbewegung des Wanderfeldes muß lediglich der Ständer oder die Läuferspulenanordnung den zurückzulegenden Weg überspannen. Folgende Ausführungen sind daher möglich: der Ständer kann sich konzentrisch um den gesamten Umfang ein- oder beidseitig des Schwungrades erstrecken. Er bildet also einen Ring oder Doppelring. Gleichzeitig sind die Läuferspulen in oder auf dem Schwungrad lediglich in einem segmentartigen Abschnitt des Schwungrades verteilt angeordnet. Alternativ dazu kann sich der Ständer nur über einen bestimmten Winkelbereich erstrecken und die zugeordneten Läuferspulen der Schwungradscheibe umspannen den vollen Umfang von 360°.

In besonders gelagerten Ausnahmenfällen kann es sinnvoll sein, das Schwungrad selbst als passiven Drehschwingungstilger auszubilden oder einen solchen parallel dazu anzuordnen, um durch eine kombinierte aktive und passive Schwingungsdämpfung eine optimale Geräuschminderung zu erzielen. Bei einer bevorzugten Variante ist dabei das Schwungrad aus einem inneren Schwungring und einen konzentrisch hierzu angeordneten äußeren Schwungring aufgebaut, wobei die Schwungringe drehelastisch, insbesondere über eine Gummischicht, miteinander verbunden sind.

Besonders platzsparend ist eine weitere Schwungradvariante des erfindungsgemäßen Stellgliedes. Dabei ist das Schwungrad gegenüber seiner Drehachse geneigt ausgebildet. Falls das Schwungrad einem inneren Schwungring und einen hierzu drehelastisch angeordneten äußeren Schwungring aufweist, ist es zweckmäßig, daß der äußere Schwungring gegenüber dem inneren Schwungring geneigt angeordnet ist.

Schließlich schlägt die Erfindung eine besonders einfache Drehzahlregelung für das erfindungsgemäße aktive Schwingunggssystem vor, die einen Meßwertaufnehmer zur Bestimmung von Drehungleichförmigkeiten der Welle aufweist, einen nachgeschalteten Stellgrößengeber (in der Regeltechnik als "Regler" bezeichnet) zur Erzeugung von Stellgrößen und das dem Stellgrößengeber nachgeschaltete Stellglied z.B. in Form des Linearmotors, welches auf die Drehung der Welle einwirkt. Es werden also Abweichungen von der momentanen Solldrehzahl bzw. der Soll-Winkelsegmentgeschwindigkeit fortlaufend ermittelt, daraus Stellgrößen zur Steuerung des Stellgliedes abgeleitet und schließlich durch das Stellglied eine beschleunigende oder verzögernde Kraft auf die Welle ausgeübt - und zwar derart, daß die gewünschte Momentandrehzahl fortlaufend hergestellt und aufrecht erhalten wird.

Auf diese Weise führt die Einwirkung des Stellgliedes zu einer Vergleichmäßigung der Rotation der Welle, d.h. zu einem Ausgleich der durch Drehungleichförmigkeiten verursachten Störschwingungen und damit zu einer Drehschwingungsdämpfung.

Bei einer bevorzugten Variante weist der genannte Meßwertaufnehmer (1. Alternative) einen unmittelbar an der Welle angebrachten Drehzahlsensor auf, insbesondere einen induktiven oder optischen Sensor, zur Messung der Drehzahlmomentanwerte bzw. der Winkelsegmentgeschwindigkeit der Welle und einen Vergleicher zur Bildung der Regeldifferenz. Hierdurch lassen sich die zu korrigierenden Drehungleichförmigkeiten der Welle einfach ermitteln. Der Drehzahlsensor ist einzelnen Winkelsegmenten, z.B. einer auf der Welle sitzenden Scheibe oder einem Zahnrad zugeordnet, und mißt fortlaufend die Momentanwerte der Drehzahl der einzelnen Winkelsegmente. Diese Meßwerte werden dem Vergleicher zugeführt, der sie mit entsprechenden Sollwerten vergleicht. Das Ergebnis dieses Vergleichs ist die Regeldifferenz, d.h. ein Maß für die Drehungleichförmigkeiten der Welle. Als jeweiliger Sollwert wird beispielsweise ein in der Sequenz der laufend gemessenen Istwerte vorausgegangener Meßwert, bevorzugt der unmittelbar vorausgegangene Meßwert, oder der Mittelwert aus mehreren dieser Vorgänger-Meßwerte genommen. Das Stellglied spricht dabei bevorzugt erst dann an, wenn die Regeldifferenz einen vorgegebenen Schwellenwert überschreitet.

Vorteilhaft können die Momentanwerte der Drehzahl aber auch einem Differenzierglied zur Gewinnung der differntiellen Drehzahl bzw. der momentanen Winkelsegmentbeschleunigung zugeführt werden, die im Vergleicher mit ensprechenden Sollwerten zur Ermittlung der Regeldifferenz verglichen wird. Auch hier kann bei der Auswahl der Sollwerte und dem Ansprechen des Stellgliedes analog der vorstehenden Sollwertauswahl und/oder analog dem vorsteheden Ansprechverhalten des Stellgliedes verfahren werden.

Bei einer weiteren bevorzugten Variante besteht der erfindungsgemäße Meßwertaufnehmer (2. Alternative) im wesentlichen aus einem Schwingungssensor zur Messung von jeglicher Art von Schwingungen, die auf Drehungleichförmigkeiten der rotirenden Welle zurückzuführen sind. Der Schwingungssensor ist, z.B. in einem Kraftfahrzeug, an beliebiger geeigneter Stelle angebracht, etwa an der Karosserie oder im Inneren eines Fahrzeuges, vorzugsweise im Bereich der Fahrzeugsitze, d.h. dort, wo der mit den Störschwingungen einhergehende Geräuschpegel besonders repränsentativ für Störschwingungen ist oder von den Fahrzeuginsassen als besonders störend empfunden wird.

Der Schwingungssensor ist bevorzugt ein Mikrophon, z.B. ein Tauchspulmikrophon, das vorzugsweise im Bereich der Kopfstützen der Fahrzeugsitze im einem Kfz angeordnet ist, und eine induzierte - der Frequenz der Störschallwellen proportionale - Spannung erzeugt. Ferner kommen als Schwingungssensoren Schwingungsaufnehmer in Betracht, die z.B. unmittelbar an der Fahrzeuzkarosserie angebracht sind, wie induktive Aufnehmer, kapazitive Aufnehmer, Piezoaufnehmer, Widerstandsaufnehmer (Dehnungsmeßstreifen) etc..

Außerdem weist der Meßwertaufnehmer (2. Alterantive) eine dem Schwingungssensor nachgeschaltete Verarbeitungsvorrichtung auf, die zur Ableitung der Drehzahlmomentanwerte bzw. der Winkelsegmentgeschwindigkeit der Welle aus den gemessenen Störschwingungsmeßwerten ausgelegt ist; schließlich einen Vergleicher zur Bildung der Regeldifferenz .

Danach werden die vom Schwingungssensor erfaßten Störschwingungen als Meßsignal der Verarbeitungsvorrichtung zur Weiterverarbeitung zugeleitet. Diese wertet im allgemeinen die Amplituden, Frequenzen und Phasen der empfangenen Meßsignale aus und leitet daraus Parameter der Wellenbewegung ab, inbesondere die Momentanwerte für die Wellendrehzahl bzw. die Winkelsegmentgeschwindigkeit oder die Winkelsegmentbeschleunigung. Für diese Ableitung ist es notwendig, eine Übertragungsfunktion zu kennen, welche die Einflüsse des Übertragungsmediums, z.B. Getriebe, Fahrzeugkarosserie, Luft, etc., auf die Ausbreitung der Störschwingungen (von der Störschwingungsquelle - nämlich der von einem Antriebsaggregat betriebenen oder darin befindlichen rotierenden Welle - zum Meßort) berücksichtigt. Die Übertragungsfunktion wird vorzugsweise experimentell bestimmt.

Aus den mit Hilfe des Schwingungssensors gemessenen Störschwingungsmeßwerten an einem beliebigen am Meßort werden dann mit Hilfe der Übertragungsfunktion für diesen Meßort die aktuellen Parameter der Wellenbewegung der jeweiligen rotierenden Wellen bestimmt. Die abgeleiteten Momentanmeßgrößen werden dann dem Vergleicher zugeführt, der einen Vergleich mit den Sollwerten durchführt, um daraus die Regeldifferenz zu bilden.

Der Vergleicher ist - sowohl beim Meßwertaufnehmer 1. Alternative, als auch beim Meßwertaufnehmer 2. Alternativ - bevorzugt ein Rechner, in dem verschiedenen Regelstrategien, z.B. als Software-Kennlinienfeld abgelegt sind, womit sämtliche auftretende Drehungleichförmigkeiten - und damit Störschwinngungsfrequenzen der Welle - wirksam gedämpft werden können.

Der dem Vergleicher nachgeschaltete Stellgrößengeber leitet aus der Regeldifferenz die Stellgrößen zur Kompensation der Drehungleichförmigkeiten ab - und zwar derart, daß ein günstiger zeitlicher Ablauf des Regelvorganges erreicht wird. Vorzugsweise ist der Stellgrößengeber mit einer Vorrichtung zur Signalverstärkung ausgestattet, so daß vorteilhaft das ankommende Regeldifferenzsignal verstärkt an das Stellglied weitergegeben wird.

Je nach der Betriebsart des Antriebsaggregates sind unterschiedliche Regelstrategien zweckmäßig: Bei einer Festwertregelung wird ein vorgegebener, zeitlich konstanter Wert der Momentandrehzahl innerhalb eines bestimmten Drehzahlbereiches aufrecht erhalten. Hingegen wird bei einer Folgeregelung ein vorgegebener, aber zeitlich variabler Wert der Drehzahl herbeigeführt.

Ferner wird das Stellglied vorzugsweise derart betrieben, daß es bei einer Regeldifferenz entweder impulsartig, oder über einen längeren Zeitraum gleichmäßig eine Kraft auf die Welle ausübt. Sollten sich dieselben Drehungleichförmigkeiten periodisch wiederholen, so ist es empfehlenswert, die Korrektur der Drehzahl gegenphasig dazu zu steuern. Bei anderen unregelmäßigen Abweichungen von der Solldrehzahl über einen längeren Zeitraum wirkt das Stellglied entsprechend gleichmäßig dämpfend oder beschleunigend auf die Drehzahl der Welle ein.

Weitere Vorteile und Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. In der Zeichnung zeigen:
- Fig. 1: ein Blockschaltbild einer Ausführung eines erfindungsgemäßen aktiven Schwingungsdämpfungssystems;
- Fig. 2: eine Seitenansicht auf ein Ausführungsbeispiel eines erfindungsgemäßen Stellgliedes des Schwingungsdämpfungssystems in Fig. 1;
- Fig. 3: einen Vertikalschnitt längs der Linie II-II in Fig. 2; und
- Fig. 4: eine Schnittansicht analog Fig. 3 einer Schwungradvariante eines erfindungsgemäßen Stellgliedes.

Die nachfolgende Beschreibung geht - lediglich aus Gründen einer einfacheren Darstellung - von einer Kurbelwelle 12 eines Kraftfahrzeug-Verbrennungsmotors aus, ohne jedoch darauf beschränken zu wollen.

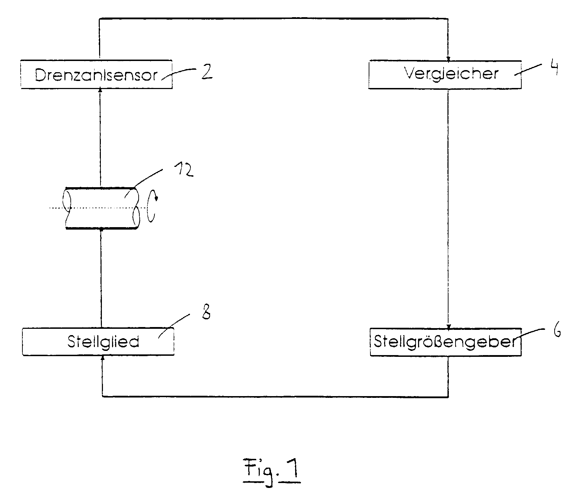

Fig. 1 zeigt einen Regelkreis eines Drehzahlreglers zur aktiven Schwingungsdämpfung von Kurbelwellen-Störschwingungen und damit einhergehenden Geräuschen, die auf Drehungleichförmigkeiten der vom Verbrennungsmotor betriebenen Kurbelwelle 12 zurückzuführen sind.

Nach Fig. 1 ist ein Drehzahlsensor 2 an geeigneter Stelle an der Kurbelwelle 12 angeordnet, um mehrere Winkelsegmente der Kurbelwelle 12 zu erfassen und fortlaufend die momentane Kurbelwellendrehzahl bzw. winkelsegmentgeschwindigkeit zu messen. Hierfür kann beispielsweise ein induktiver Drehzahlsensor verwendet werden, der einzelnen Winkelsegmenten eines Schwungrades oder eines Zahnrades auf der Kurbelwelle 12 zugeordnet ist. Aber auch ein optischer Drehzahlsensor ist denkbar, welcher die momentane Wellendrehzahl aufgrund einer durch die Drehung der Welle verursachten Unterbrechung einer Lichtschranke mißt. Die Wellendrehzahlmessung kann analog zur Raddrehzahl- und Schlupfmessung, wie sie von ABS-Systemen her bekannt ist, erfolgen.

Die vom Drehzahlsensor 2 erfaßten Momentandrehzahlen werden einem Vergleicher 4 zugeleitet. Dieser ist ein Rechner, der den Istwert der momentanen Drehzahl mit einem vorgegebenen Sollwert vergleicht und daraus ein Regeldifferenzsignal als Maß für eine etwaige momentane oder periodische Drehungleichförmigkeit der Kurbelwelle 12 erzeugt. Das letztgenannte Signal veranlaßt einen nachgeschalteten Stellgrößengeber 6 einen Wert für eine Stellgröße zur Kompensation der Drehungleichförmigkeit zu generieren. Die Stellgröße wird schließlich von einem Stellglied 8 empfangen, welches daraufhin auf die Bewegung der Kurbelwelle 12 derart einwirkt, daß der vorgegebene Momentandrehzahlwert wieder hergestellt wird.

Auf diese Weise werden Störungen der Kurbelwellendrehzahl bereits im Ansatz getilgt, so daß Störschwingungen und damit verbundendene Geräusche im Kraftfahrzeug erst gar nicht aufkommen können.

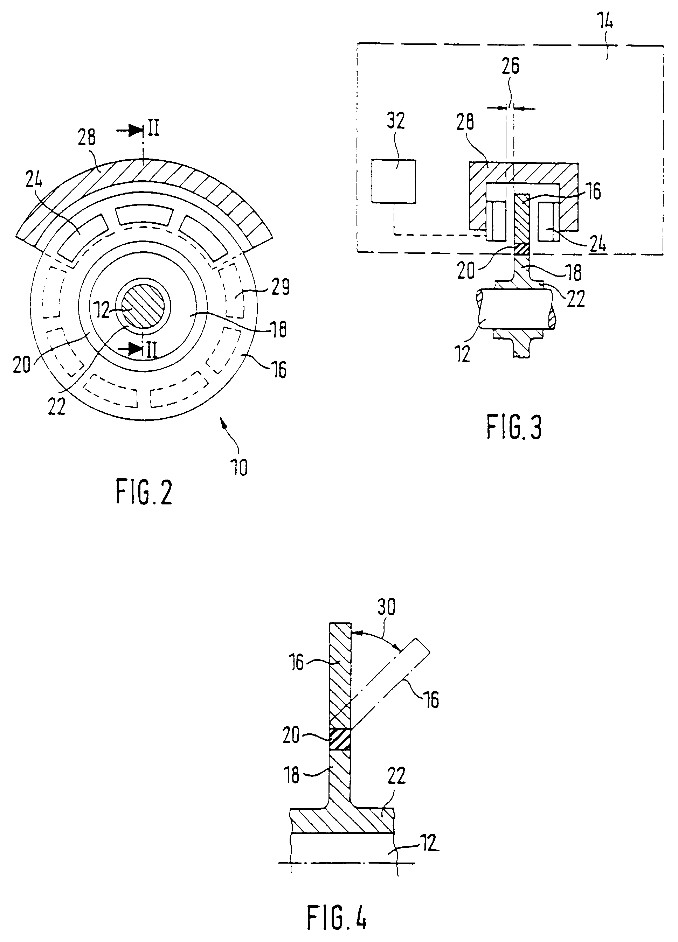

Fig. 2 und 3 zeigen ein Ausführunfsbeispiel für ein erfindungsgemäßes Stellglied 8 in Form eines Linearmotors des Schwingungsdämpfungssystems.

Das Stellglied 8 weist ein scheibenförmiges Schwungrad 10 auf, das auf einer Antriebs-/Abtriebswelle des Verbrennungsmotor, hier der Kurbelwelle 12, sitzt und mit einem Schub- bzw. Verzögerungsmoment beaufschlagt wird. Hierzu ist es als bewegtes Grundelement bzw. Läufer eines Linearmotors 14 ausgebildet.

Das Schwungrad 10 weist einen äußeren Schwungring 16 und einen hierzu konzentrischen inneren Schwungring 18 auf. Die beiden Schwungringe 16 und 18 sind über eine ringartige Gummischicht 20 elastisch miteinander verbunden. Der innere Schwungring 18 geht in eine Nabe 22 über, die fest auf der Kurbelwelle 12 sitzt. Auf diese Weise bildet das Schwungrad 10 des Stellgliedes 8 zusätzlich einen an sich bekannten Drehschwingungstilger, der störenden Drehungleichförmigkeiten der Kurbelwelle 12 auch passiv entgegenwirkt.

Zu beiden Seiten des äußeren Schwungringes 16 sind einander gegenüberliegend jeweils drei Ständerspulen 24 angeordnet. Dabei sind die Ständerspulen 24 innerhalb eines segmentartigen Winkelabschnittes des Schwungrades 10 gleichmäßig verteilt, haben einen geringen Abstand vom äußeren Schwungring 16 und bilden mit diesem Spalt 26. Der Spalt 26 ist so eng wie möglich zu wählen - etwa zwischen 0,1 und 1,5 mm.

Die Ständerspulen 24 werden von einem das Schwungrad 10 jochartig übergreifenden stationären Haltebügel 28 getragen. Bevorzugt ist der Haltebügel 28 auf der Kurbelwelle 12 drehgelagert (in der Zeichnung nicht gezeigt), so daß die Ständerspulen 24 und das Schwungrad 10 bei Erschütterungen des Kraftfahrzeuges gemeinsam schwingen, deren wechselseitige Ausrichtung und der Spalt 26 also im wesentlichen konstant bleiben.

Die Ständerspulen 24 werden in bekannter Weise über eine fest verlegte Stromzuführung (in der Zeichnung nicht gezeigt) mit der vom Stellgrößengeber 6 erzeugten Stellgröße beaufschlagt und erzeugen hierauf ein magnetisches Wanderfeld, welches über den Spalt 26 greift, den äußeren Schwungring 16 durchsetzt, ein darin in sich ringartig geschlossenes elektrisches Feld und somit dort eine Ringspannung induziert. Aufgrund dieser Spannung fließen im Schwungring 16 Ring- bzw. Wirbelströme, deren magnetische Felder - mit dem Wanderfeld der Ständerspulen 24 verkettet - eine Kraft in tangentialer Richtung auf das Schwungrad 10 ausüben. Je nach Art der Drehungleichförmigkeiten wird die Umlaufrichtung des Wanderfeldes relativ zur Umlaufrichtung der Kurbelwelle so gewählt, daß bei zu niedrigen Momentandrehzahlen das Schwungrad 10 eine Schubkraft und bei zu hohen Momentandrehzahlen eine Verzögerungskraft erfährt - bis eine Vergleichmäßigung der Kurbelwellenrotation bzw. eine Drehschwingungsdämpfung eintritt. Die Stärke dieser Schub- bzw. Verzögerungskraft läßt sich einfach durch eine Änderung der Stromstärke in den Ständerspulen 24 und damit der magnetischen Flußdichte durch den Spalt 26 steuern.

Der äußere Schwungring 16 des Schwungrades 10 ist aus Stahl gefertigt und an seinen beiden, den Ständerspulen 24 zugekehrten Seitenflächen mit Kupferblech belegt. Hierdurch lassen sich hohe Wirbelströme in den Seitenflächen und entsprechend hohe Schub- bzw. Verzögerungskräfte induzieren. Eine weitere Steigerung der Schubkraft läßt sich durch die auf dem Schwungrad 10 angeordneten mit einem Strom beaufschlagten Läuferspulen 29 (wie in Fig. 1 durch gestrichelte Linien angedeutet) erzielen. Dabei sind die Läuferspulen 29 derart angeordnet, daß deren Magnetfeld senkrecht zur Spaltebene steht und derart beaufschlagt, daß sich die Felder der Läuferspulen 29 und Ständerspulen 24 maximal verstärken. Das Feld der Läuferspulen 29 kann dabei ein Gleichfeld oder ein den Phasen des Feldes der Ständerpulen 24 angepaßtes Wanderfeld sein. Im letzgenannten Fall basiert die auf die Kurbelwelle einwirkende Schub- bzw. Verzögerungskraft vor allem auf der "Mitnahme" des Feldes der Läuferspulen 29 durch das Wanderfeld der Ständerspulen 24.

Wie bereits ausgeführt, ist im vorliegenden Ausführungsbeispiel das Schwungrad 10 zusätzlich als passiver Drehschwingungstilger ausgebildet, dessen ringartige Gummischicht 20 den inneren Schwungring 18 mit dem - etwaige Drehschwingungen tilgenden - äußeren Schwungring 16 elastisch verbindet. Hat die elastische Verbindung der beiden Schwungringe 16, 18 - wie im dargestellten Ausführungsbeispiel - elektrisch isolierende Eigenschaften, ergibt sich zusätzlich zur Schwingungsdämpfung auch noch ein elektrischer Vorteil: die im äußeren Schwungring 16 induzierten Ringströme können nicht in den inneren Schwungring 18 übertreten, konzentrieren sich also auf den drehmoment-günstigen Peripheriebereich des Schwungrades 10.

In Fig. 4 ist eine Variante des Schwungrades 10 dargestellt. Danach ist der äußere Schwungring 16 des Schwungrades 10 gegenüber der Schwungradebene um einen Winkel 30 geneigt. Die übrigen Komponenten des Anlassers nach Fig. 2 und 3 sind dieser Orientierung entsprechend angeordnet. Auf diese Weise kann das Stellglied 14 besonders einfach den Raumverhältnissen im Bereich des Schwungrades 10 baulich angepaßt werden - ohne dabei dessen Wirkungsgrad zu beeinträchtigen.

Gemäß Fig. 3 ist dem Stellglied 8 eine schematisch dargestellte elektronische Schaltung 32 zugeordnet, die es in einem Kraftfahrzeug außer zur Drehzahlregelung in zwei weiteren Betriebsarten betreiben kann: Bei Betätigen des Anlasserschlüssels arbeitet das Stellglied 8 - hier der Linearmotor 14 - als Motor zum Anwerfen des Verbrennungsmotors; danach kann es in einen Generatorbetrieb umschaltet werden. Im letztgenannten Generatorbetrieb werden die Läuferspulen 29 über Schleifkontakte (hier nicht gezeigt) mit einem ein Magnetfeld erzeugenden Strom beaufschlagt. Aufgrund der Schwungradbewegung bewegt sich dieses Feld relativ zur Spaltebene und induziert bzw. generiert in den Ständerspulen 24 eine Spannung, welche das Fahrzeug im Fahrbetrieb mit elektrischer Energie versorgt. Auf diese Weise kann der erfindungsgemäße Linearmotor 14 in einem Kraftfahrzeug auch die Funktion eines Anlassers zum Starten des Verbrennungsmotors und einer Lichtmaschine zur Ernergieversorgung des Fahrzeuges übernehemen. Die Schaltung 32 ist zweckmäßig als Prioritätenschaltung ausgelegt, welche den Linearmotor 14 immer dann in den Generatorbetieb umschaltet, wenn keine Drehzahlregelung erforderlich ist, z.B. in niedrigen Drehzahlbereichen.

Selbstverständlich kann der Linearmotor 14 zur Drehzahlregelung und zur Stromerzeugung gleichzeitig genutzt werden - wenn auch mit geringerer Stromausbeute, weil die in den Ständerspulen 24 induzierte Spannung wiederum Wirbelströme hervorruft, deren magnetische Felder eine Verzögerungskraft auf das Schwungrad 10 ausüben.

## Patentansprüche

1. Verfahren zur aktiven Schwingungsdämpfung in Antriebsaggregaten mit wenigstens einer rotierenden Welle (12), insbesondere Kurbelwelle für Kraftfahrzeuge, bei welchem Drehzahlungleichförmigkeiten der rotierenden Welle (12) dadurch unterhalb vorgegebener Werte gehalten werden, daß
- ein auf der Welle (12) sitzendes Schwungrad als bewegtes Grundelement einer elektrischen Maschine und verwendet wird,
dadurch gekennzeichnet, daß
- als elektrische Maschine eine Linearmaschine (14) verwendet wird,
- bei der ein Wanderfeld erzeugt wird, und
- die - je nach Art einer zu kompensierenden Drehungleichförmigkeit - als Motor oder als Generator betrieben wird.

2. Verfahren nach Anspruch 1, dadurch gekennzeichnet, daß Drehungleichförmigkeiten der rotierenden Welle (12) ermittelt, daraus Stellgrößen zur Steuerung eines Stellgliedes (8) abgeleitet werden und mittels des Stellgliedes (8) auf die Drehung der Welle (12) eingewirkt wird.

3. Verfahren nach Anspruch 2, dadurch gekennzeichnet, daß die Drehzahlmomentanwerte bzw. die Winkelsegmentgeschwindigkeit der Welle (12) unmittelbar an der Welle (12) gemessen und mit Sollwerten verglichen werden.

4. Verfahren nach Anspruch 2, dadurch gekennzeichnet, daß die resultierenden Störschwingungen gemessen, daraus Meßwerte für die Drehzahlmomentanwerte bzw. die Winkelsegmentgeschwindigkeit der Welle (12) abgeleitet und mit Sollwerten verglichen werden.

5. Verfahren nach einem der vorstehenden Ansprüche, dadurch gekennzeichnet, daß auf die Drehung der Welle (12) periodisch oder über einen längeren Zeitraum gleichmäßig eingewirkt wird.

6. Aktives Schwingungsdämpfungssystem für Antriebsaggregate mit wenigstens einer ein Schwungrad (10) aufweisenden rotierenden Welle (12), insbesondere Kurbelwelle für Kraftfahrzeuge, wobei das Schwungrad (10) als bewegtes Grundelement einer - auf die Drehung der Welle einwirkenden - elektrischen Maschine ausgebildet ist, dadurch gekennzeichnet, daß
die elektrische Maschine eine Linearmaschine (14) ist, bei der ein Wanderfeld erzeugt wird und die - je nach Art einer zu kompensierenden Drehungleichförmigkeit - als Motor oder als Generator betrieben wird.

7. Aktives Schwingungsdämpfungsystem nach Anspruch 6, dadurch gekennzeichnet, daß die Linearmaschine (14) derart ausgestaltet ist, daß der magnetische Fluß in ihrem Spalt (24) und/oder der Spalt (24) selbst veränderbar ist/sind.

8. Aktives Schwingungsdämpfungsystem nach Anspruch 6 oder 7, gekennzeichnet durch Schaltmittel (32), die derart ausgestaltet sind, daß sie die Linearmaschine (14) je nach Art der Drehungleichförmigkeiten als Elektromotor oder als Generator betreiben.

9. Aktives Schwingungsdämpfungsystem nach einem der Ansprüche 6-8, dadurch gekennzeichnet, daß die Welle (12) die Abtriebswelle eines Antriebsaggregates, insbesondere die Kurbelwelle eines Kraftfahrzeug-Verbrennungsmotors, ist und Steuermittel vorgesehen sind, welche die Linearmaschine (14) beim Starten des Antriebsaggregates als Anlasser betreiben.

10. Aktives Schwingungsdämpfungsystem nach einm der Ansprüche 6-9, dadurch gekennzeichnet, daß Erregerspulen (24) auf dem stationären Grundelement (28) an zumindest einer Seite des Schwungrades (10), insbesondere innerhalb bestimmter Winkelbereiche oder über den gesamten Umfang - gleich- oder ungleichmäßig - verteilt, angeordnet sind.

11. Aktives Schwingungsdämpfungsystem nach einem der Ansprüche 6-10, dadurch gekennzeichnet, daß das Schwungrad (10) mit einem Material hoher Leitfähigkeit beschichtet oder belegt ist oder kurzgeschlossene Läuferwicklungen in oder auf dem Schwungrad (10) angeordnet sind, derart, daß das in der leitenden Schicht oder den Läuferwicklungen induzierte Magnetfeld senkrecht auf einer Spaltebene steht.

12. Aktives Schwingungsdämpfungsystem nach einem der Ansprüche 6-11, dadurch gekennzeichnet, daß mit Strom beaufschlagte Läuferspulen (29) in oder auf dem Schwungrad (10) angeordnet sind, derart, daß deren Magnetfeld senkrecht auf der Spaltebene steht.

13. Aktives Schwingungsdämpfungsystem nach einem der Ansprüche 6-12, dadurch gekennzeichnet, daß ein Radialschnitt des Schwungrades (10) einen T-förmigen Querschnitt aufweist.

14. Aktives Schwingungsdämpfungsystem nach Anspruch 13, dadurch gekennzeichnet, daß die Erregerspulen in oder auf dem Schwungrad (10) und Material hoher Leitfähigkeit oder kurzgeschlossene Wicklungen auf dem stationären Grundelement (28) angeordnet sind, derart, daß die Funktionen von bewegtem und stationären Grundelement (10, 28) hinsichtlich der Erzeugung von Primär- und Sekundärfeld gegenüber einem der Ansprüche 10 bis 12 vertauscht sind.

15. Aktives Schwingungsdämpfungsystem nach einem der Ansprüche 6-14, dadurch gekennzeichnet, daß das Schwungrad (10) als passiver Drehschwingungstilger ausgebildet oder ein solcher parallel dazu angeordnet ist.

16. Aktives Schwingungsdämpfungsystem nach Anspruch 15, dadurch gekennzeichnet, daß das Schwungrad (10) einen inneren Schwungring (18) und einen konzentrisch hierzu angeordneten äußeren Schwungring (16) aufweist und die Schwungringe (16, 18) drehelastisch, insbesondere über eine Gummischicht (20), miteinander verbunden sind.

17. Aktives Schwingungsdämpfungsystem nach einem der Ansprüche 6-16, dadurch gekennzeichnet, daß das Schwungrad (10) gegenüber seiner Drehachse geneigt ist.

18. Aktives Schwingungsdämpfungsystem nach Anspruch 17, dadurch gekennzeichnet, daß das der äußere Schwungring (16) gegenüber dem inneren Schwungring (18) geneigt ist.

19. Aktives Schwingungsdämpfungssystem nach einem der Ansprüche 6-18, gekennzeichnet durch:
- einen Meßwertaufnehmer (2,4) zur Bestimmung von Drehungleichförmigkeiten an der Welle (12);
- einen nachgeschalteten Stellgrößengeber (6) zur Erzeugung von Stellgrößen; und
- ein dem Stellgrößengeber (6) nachgeschaltetes Stellglied (8), das auf die Bewegung der Welle einwirkt.

20. Aktives Schwingungsdämpfungssystem nach Anspruch 19, dadurch gekennzeichnet, daß der Meßwertaufnehmer (2, 6) einen an der Welle (12) angebrachten Winkelsegment-Drehzahlsensor (2), insbesondere einen optischen oder induktiven Sensor, und einen Vergleicher (4) aufweist.

21. Aktives Schwingungsdämpfungssystem nach Anspruch 19, dadurch gekennzeichnet, daß der Meßwertaufnehmer aufweist: einen Schwingungssensor zur Erfassung der - von Drehzahlungleichförmigkeiten der rotierenden Welle (12) resultierenden - Störschwingungen, eine Verarbeitungsvorrichtung zur Ableitung der Drehzahlmomentanwerte bzw. die Winkelsegmentgeschwindigkeit der Welle (12) aus den Störschwingungsmeßwerten und einen Vergleicher.

## Claims

1. A process for active vibration damping in drive units having at least one rotating shaft (12), in particular a crankshaft for motor vehicles, in which speed irregularities of the rotating shaft (12) are kept below predetermined values by the fact that
- a flywheel seated on the shaft (12) is used as a moving basic component of an electrical machine (and),
**characterised in that**
- a linear machine (14) is used as the electric machine,
- in which a field of travelling waves is produced, and
- which is driven as a motor or as a generator, depending on the type of rotational irregularity to be compensated.

2. A method according to Claim 1,
**characterised in that** rotational irregularities of the rotating shaft (12) are determined, control variables are derived therefrom to control a correcting element (8) and the rotation of the shaft (12) is acted on by means of the correcting element (8).

3. A process according to Claim 2,
**characterised in that** the instantaneous rotational speed values and the angular segment velocity of the shaft (12) are measured directly at the shaft (12) and compared with set values.

4. A process according to Claim 2,
**characterised in that** the resultant spurious vibrations are measured, from them measured values are derived for the instantaneous rotational speed values and respectively the angular segment velocity of the shaft (12) and compared with the set values.

5. A process according to one of the preceding Claims,
**characterised in that** the rotation of the shaft (12) is uniformly acted upon periodically or over a longer time period.

6. An active vibration damping system for drive assemblies having at least one rotating shaft (12) comprising a flywheel (10), in particular a crankshaft for motor vehicles, with the flywheel (10) being constructed as a moving basic component of an electric machine which acts on the rotation of the shaft,
**characterised in that** the electric machine is a linear machine (14), in which a field of travelling waves is produced and which is driven as a motor or generator depending to the type of rotational irregularity to be compensated.

7. An active vibration damping system according to Claim 6,
**characterised in that** the linear machine (14) is constructed in such a manner that the magnetic flux in its gap (24) and/or the gap (24) itself can be altered.

8. An active vibration damping system according to Claim 6 or 7,
**characterised by** switching means (32), which are constructed in such a manner that they drive the linear machine (14) as an electric motor or as a generator depending on the type of rotational irregularity.

9. An active vibration damping system according to one of Claims 6-8,
**characterised in that** the shaft (12) is the driven shaft of a drive assembly, in particular the crankshaft of an internal combustion engine of a motor vehicle, and control means are provided, which drive the linear machine (14) as a starter when starting up the drive assembly.

10. An active vibration damping system according to one of Claims 6-9,
**characterised in that** exciting coils (24) are disposed on the stationary basic component (28) on at least one side of the flywheel (10), in particular inside determined angular regions or distributed uniformly or non-uniformly over the entire periphery.

11. An active vibration damping system according to one of Claims 6-10,
**characterised in that** the flywheel (10) is coated or covered with a material having a high conductivity or short-circuit rotor windings are disposed in or on the flywheel (10) in such a manner that the magnetic field induced in the conductive layer or the rotor windings are perpendicular to a gap plane.

12. An active vibration damping system according to one of Claims 6-11,
**characterised in that** rotor coils (29) supplied with current are disposed in or on the flywheel (10) in such a manner that its magnetic field is perpendicular to the plane of the gap.

13. An active vibration damping system according to one of Claims 6-12,
**characterised in that** a radial section of the flywheel (10) has a T-shaped cross section.

14. An active vibration damping system according to Claim 13,
**characterised in that** the exciting coils are disposed in or on the flywheel (10) and material of high conductivity or short-circuit windings on the stationary basic component (28) in such a manner that the functions of the moving and the stationary basic components (10, 28) are exchanged in comparison with one of Claims 10 to 12 with respect to the production of a primary and secondary fields.

15. An active vibration damping system according to one of Claims 6-14,
**characterised in that** the flywheel (10) is constructed as a passive torsional vibration eradicator or such an eradicator is disposed parallel thereto.

16. An active vibration damping system according to Claim 15,
**characterised in that** the flywheel (10) comprises an inner rotating ring (18) and an outer rotating ring (16) disposed concentrically thereto and the rotating rings (16, 18) are connected to one another in a torsionally elastic manner, in particular via a rubber layer (20).

17. An active vibration damping system according to one of Claims 6-16,
**characterised in that** the flywheel (10) is inclined in relation to its axis of rotation.

18. An active vibration damping system according to Claim 17,
**characterised in that** the outer rotating ring (16) is inclined in relation to inner rotating ring (18).

19. An active vibration damping system according to one of Claims 6 - 18,
**characterised by**:
- a transducer (2, 4) for determining rotational irregularities on the shaft (12);
- a post-connected control variable generator (6) for producing- control variables; and
- a correcting element (8) connected after the control variable generator (6), which acts on the movement of the shaft.

20. An active vibration damping system according to Claim 19,
**characterised in that** the transducer (2, 6) comprises an angular segment speed sensor (2) mounted on the shaft (12), in particular an optical or inductive sensor, and a comparator (4).

21. An active vibration damping system according to Claim 19,
**characterised in that** the transducer comprises: a vibration sensor to detect the spurious vibrations, which result from speed irregularities of the rotating shaft (12), a processing device for deducing the instantaneous values of the rotational speed or respectively the angular segment velocity of the shaft (12) from the measured values of the spurious vibrations, and a comparator.

## Revendications

1. Procédé d'amortissement actif de vibrations dans des trains moteurs comportant au moins un arbre rotatif (12), notamment un vilebrequin pour véhicules automobiles, selon lequel des irrégularités de la vitesse de rotation de l'arbre rotatif (12) sont maintenues inférieures à des valeurs prédéterminées par le fait que:
- on utilise un volant monté sur l'arbre (12) comme élément de base mobile d'une machine électrique,
caractérisé en ce que
- on utilise comme machine électrique une machine linéaire (14),
- dans laquelle un champ d'ondes progressives est produit, et
- qui - en fonction d'une irrégularité de la vitesse de rotation à compenser - fonctionne en moteur ou en générateur.

2. Procédé selon la revendication 1, caractérisé en ce que des irrégularités de rotation de l'arbre rotatif (12) sont déterminées, que des grandeurs de réglage pour la commande d'un organe de réglage (8) sont tirées de ces irrégularités et qu'une action sur la rotation de l'arbre (12) est appliquée au moyen de l'organe de réglage (8).

3. Procédé selon la revendication 2, caractérisé en ce que les valeurs instantanées de la vitesse de rotation ou la vitesse de segments angulaires de l'arbre (12) sont mesurées directement sur l'arbre (12) et sont comparées à des valeurs de consigne.

4. Procédé selon la revendication 2, caractérisé en ce que les oscillations parasites résultantes sont mesurées, que des valeurs de mesure pour les valeurs instantanées de la vitesse de rotation ou la vitesse de segments angulaires de l'arbre (12) sont obtenues à partir de ces oscillations parasites et sont comparées à des valeurs de consigne.

5. Procédé selon l'une des revendications précédentes, caractérisé en ce qu'une action est appliquée à la rotation de l'arbre (12) périodiquement ou de façon régulière pendant un intervalle de temps assez long.

6. Système actif d'amortissement d'oscillations pour des trains moteurs comportant au moins un arbre rotatif (12) possédant un volant (10), notamment un vilebrequin pour véhicules automobiles, dans lequel le volant (10) est agencé en tant qu'élément de base mobile d'une machine électrique - agissant sur la rotation de l'arbre -, caractérisé en ce que
la machine électrique est une machine linéaire (14), dans laquelle un champ d'ondes progressives est produit et qui - en fonction du type d'une irrégularité de rotation devant être compensée - fonctionne en tant que moteur ou en tant que générateur.

7. Système actif d'amortissement d'oscillations selon la revendication 6, caractérisé en ce que la machine linéaire (14) est agencée de telle sorte que le flux magnétique dans sa fente (24) et/ou la fente (24) elle-même soit/soient modifiables).

8. Système actif d'amortissement d'oscillations selon la revendication 6 ou 7, caractérisé par des moyens de commutation (32), qui sont agencés de telle sorte qu'en fonction d'irrégularités de rotation, ils fassent fonctionner la machine linéaire (14) en moteur électrique ou en générateur.

9. Système actif d'amortissement d'oscillations selon l'une des revendications 6-8, caractérisé en ce que l'arbre (17) est l'arbre mené d'un train moteur, notamment le vilebrequin d'un moteur à combustion interne d'un véhicule automobile, et qu'il est prévu des moyens de commande qui font fonctionner la machine linéaire (4) en tant que démarreur lors du démarrage du train moteur.

10. Système actif d'amortissement d'oscillations selon l'une des revendications 6-9, caractérisé en ce que des bobines d'excitation (24) sont montées sur un élément de base fixe (28), au moins d'un côté du volant (10), notamment à l'intérieur de plages angulaires déterminées ou bien sur toute la périphérie en étant réparties - d'une manière uniforme ou non uniforme.

11. Système actif d'amortissement d'oscillations selon l'une des revendications 6-10, caractérisé en ce que le volant (10) est garni d'un matériau possédant une haute conductivité ou que des enroulements rotoriques court-circuités sont disposés dans ou sur le volant (10) de telle sorte que le champ magnétique induit dans la couche conductrice ou dans les enroulements rotoriques soit perpendiculaire à un plan de la fente.

12. Système actif d'amortissement d'oscillations selon l'une des revendications 6-11, caractérisé en ce que les bobines rotoriques (29) chargées par un courant sont disposées dans ou sur le volant (10) de telle sorte que leur champ magnétique est perpendiculaire au plan de la fente.

13. Système actif d'amortissement d'oscillations selon l'une des revendications 6-12, caractérisé en ce qu'une découpe radiale du volant (10) possède une section transversale en forme de T.

14. Système actif d'amortissement d'oscillations selon la revendication 13, caractérisé en ce que les bobines d'excitation sont disposées dans ou sur le volant (10) et qu'un matériau possédant une conductivité élevée ou des enroulements court-circuités sont disposés sur l'élément de base fixe (28) de telle sorte que les fonctions des éléments de base mobile et fixe (10, 28) en rapport avec la production d'un champ primaire et d'un champ secondaire soient permutés par rapport à l'une des revendications 10 à 12.

15. Système actif d'amortissement d'oscillations selon l'une des revendications 6-14, caractérisé en ce que le volant (10) est agencé sous la forme d'un dispositif passif d'amortissement d'oscillations de rotation ou qu'un tel dispositif est disposé en parallèle avec le volant.

16. Système actif d'amortissement d'oscillations selon la revendication 15, caractérisé en ce que le volant (10) possède une bague intérieure d'inertie (18) et une bague extérieure d'inertie (16) disposée concentriquement par rapport à la précédente et que les bagues d'inertie (16, 18) sont reliées entre elles de manière à présenter une élasticité de rotation, notamment moyennant l'interposition d'une couche de caoutchouc (20).

17. Système actif d'amortissement d'oscillations selon l'une des revendications 6-7, caractérisé en ce que le volant (10) est incliné par rapport à son axe de rotation.

18. Système actif d'amortissement d'oscillations selon la revendication 17, caractérisé en ce que la bague extérieure d'inertie (16) est inclinée par rapport à la bague intérieure d'inertie (18).

19. Système actif d'amortissement d'oscillations selon l'une des revendications 6-18, caractérisé par :
- un capteur de mesure (2, 4) pour déterminer les irrégularités de rotation au niveau de l'arbre (12) ;
- un générateur (6) de grandeurs de réglage, branché en aval, pour produire des grandeurs de réglage ; et
- un organe de réglage (8) branché en aval du générateur (6) de grandeurs de réglage et qui agit sur le déplacement de l'arbre.

20. Système actif d'amortissement d'oscillations selon la revendication 19, caractérisé en ce que le capteur de mesure (2, 6) comporte un capteur (2) de vitesse de rotation de segments angulaires monté sur l'arbre (12), notamment un capteur optique ou inductif, et un comparateur (4).

21. Système actif d'amortissement d'oscillations selon la revendication 19, caractérisé en ce que le capteur de mesure comporte : un capteur d'oscillations pour détecter les oscillations parasites - résultant d'irrégularités de la vitesse de rotation de l'arbre rotatif (10) -, un dispositif de traitement pour l'obtention des valeurs instantanées du couple ou la vitesse de segments angulaires de l'arbre (12) à partir des valeurs de mesure d'oscillations parasites, et un comparateur.
